# EUROPEAN PATENT APPLICATION

(11) **EP 2 765 397 A1**
(43) Date of publication of application: **13.08.2014**
(21) Application number: 13163978.3
(22) Date of filing: 16.04.2013
(51) Int. Cl.: G01F 15/00

(54) **Safety frame for consumption meters**

(30) Priority: 08.02.2013 HU 1300020 U
(71) Applicant: Csupor, Zsolt Ferenc, 6211 Kaskantyu (HU)
(72) Inventor: Csupor, Zsolt Ferenc, 6211 Kaskantyu (HU)
(74) Representative: Harangozo, Gabor

(57) **Abstract**

The invention relates to a safety frame (1) comprising two flat frame parts (2, 3) adapted to be rigidly fixed around the indicator unit of the consumption meter, said frame parts being engaged with each other at their corresponding end portions (2a, 2b, 3a, 3b). The frame parts (2, 3), at the end portions (2a, 2b, 3a, 3b) thereof, comprise tabs (4a, 4b, 5a, 5b), each provided with at least one hole. The tabs (4a, 4b) arranged at the end portions (2a, 3a) of one of the frame parts (2) are formed so that they are engaged with the corresponding tabs (5a, 5b) arranged at the end portions (3a, 3b) of the other one of said frame parts (3). The corresponding holes of the tabs (4a, 5a; 4b, 5b) engaged with each other are arranged to be aligned during use. One of the frame parts (2) further comprises a security seal holding tab (6) provided with at least one hole and is integrally connected to said frame part (2).

## Description

The present invention relates to a safety frame for a consumption meter, in particular for a household consumption meter, for preventing the tampering thereof.

A common method of tampering household consumption meters, such as gas-meters, for the purpose of illegal consumption is resetting the mechanical counter of the consumption meter to a smaller count value than the actual count value. For such a tampering, first the security seal (lead) indicating the intact state of the counter mechanism should be removed, and then the transparent cover plate generally made of plexiglass should be removed from the front side of the indicator of the counter.

The drawback of the protection method presently used for preventing the tampering of household consumption meters is that after the illegal removal of the security seal, the front cover plate of the indicator unit can be removed in a non-destructive manner, then after tempering the counter and restoring the cover plate and the original (or a fake) security seal, the tampering of the counter can be carried out so that it remains substantially unperceivable when being surveyed.

It is an object of the present invention to improve the protection solutions known in the art and to prevent the tampering of consumption meters by providing a device which allows the access to the counter of a consumption meter only in a destructive manner, and thereby allowing an unambiguous visible recognition thereof.

The above object is achieved by providing a safety frame, in particular for preventing the tampering of a household consumption meter, wherein said safety frame comprises two flat frame parts adapted to be rigidly fixed around the indicator unit of the consumption meter, said frame parts being engaged with each other at their corresponding end portions, and wherein the frame parts, at the end portions thereof, comprise tabs, each provided with at least one hole. The tabs arranged at the end portions of one of the frame parts are formed so that they are engaged with the corresponding tabs arranged at the end portions of the other one of said frame parts. The corresponding holes of the tabs engaged with each other are arranged to be aligned during use. One of the frame parts further comprises a security seal holding tab provided with at least one hole and is integrally connected to said frame part.

Preferably, the entire safety frame is made of steel, preferably galvanized steel.

The security seal holding tab may be fixed to said frame part by spot welding, or it may be formed with said frame part as one piece.

The invention will be now described in detail with reference to the drawings, in which
Figure 1 is the front assembly view of the safety frame according to the present invention;
Figure 2 is a side view of the safety frame according to the present invention;
Figure 3 is a bottom view of the safety frame according to the present invention;
Figure 4 is a perspective view of the safety frame according to the present invention;
Figure 5 shows an application of the safety frame according to the present invention on a consumption meter in a schematic perspective view.

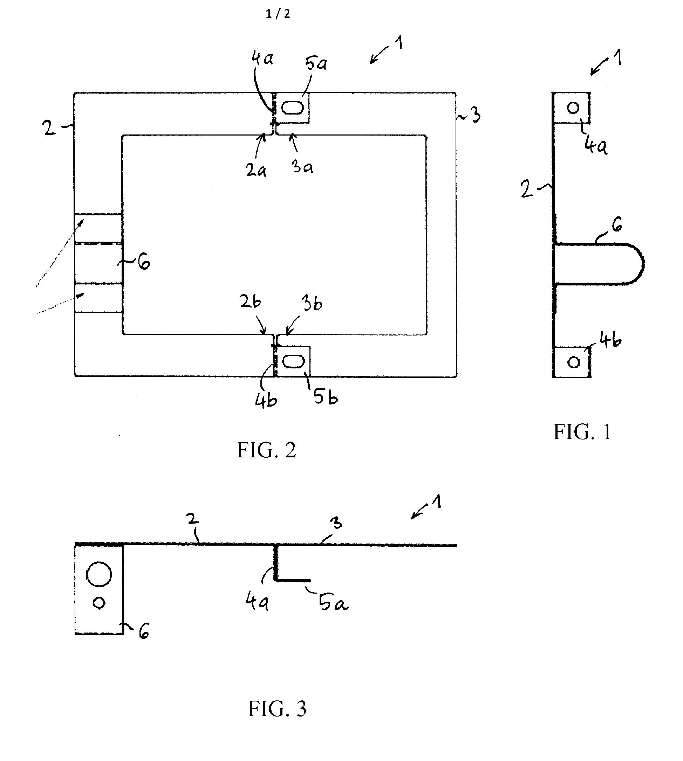

As shown in Figures 1 to 4, a safety frame 1 comprises two flat frame parts 2, 3 of a substantially rectangular U-shape. At end portions 2a, 2b, and 3a, 3b of the frame parts 2, 3, respective tabs 4a, 4b, and 5a, 5b are formed, which due to their shapes, allow an easy and unambiguous engagement of the frame parts 2, 3 with each other. On the tabs 4a, 4b of one frame part 2, at least one hole is formed so that during use, said hole is aligned with the corresponding hole on said tabs 5a, 5b of the other frame part 3, respectively, for passing the cable or the wire of the security seal therethrough.

As shown in Figures 1 to 4, one of the frame parts 2 further comprises a security seal holding tab 6 provided with at least one hole, said tab 6 being integrally connected to said frame part 2. The tab 6 may be fixed to the frame part 2, for example, by a permanent joint, such as spot welding, or it may be formed as an integral part of said frame part 2. The tab 6 is preferably arranged on a central section of the frame part 2.

The frame parts 2, 3 of the safety frame 1 and their tabs 4a, 4b, 5a, 5b and 6 are made of a thin sheet metal. If the consumption meter is intended to be located outdoors, the safety frame 1 will be preferably made of galvanized steel, thereby it will permanently resist any unfavourable weather condition.

The frame parts 2, 3 of the safety frame 1 are dimensioned so that, at least along their sides comprising the tabs 4a, 4b, 5a, 5b, they can be inserted partially into a narrow groove of a generally rectangular shape, said groove being formed between the indicator of the consumption meter and the front plate of the housing of the consumption meter. To this end, as can be seen in the front view of Figure 1, the width of at least the tabs 4a, 4b, 5a, 5b is made slightly narrower than the width d of the frame parts 2, 3, thereby insertion of the frame parts 2, 3 into the groove around the indicator becomes possible.

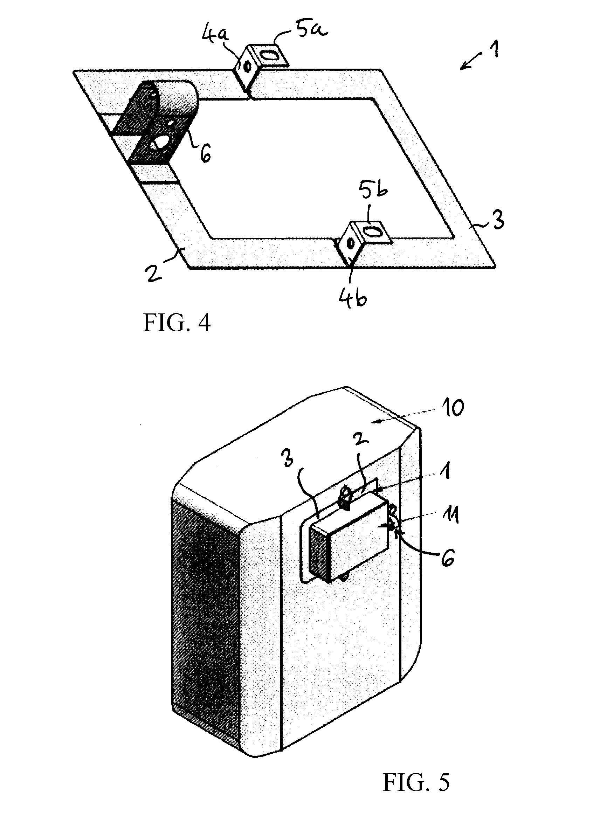

Figure 5 schematically shows the arrangement of the safety frame 1 according to the present invention around a counter unit 11 of a consumption meter 10. Since safety frame 1 comprises two frame parts 2, 3, the mounting thereof onto the consumption meter 10 can be performed very simply and quickly. The frame parts 2, 3 are pushed laterally behind a rim at the rear wall of the outer cover of indicator unit 11, said rim extending in the connection plane of the indicator unit 11 of the consumption meter 10 and the housing of the consumption meter 10, so that the corresponding end portions of the frame parts 2, 3 meet and the tabs on the engaging end portions are aligned. In order to prevent separation of the two frame parts 2, 3 thus tightly engaged from each other, a security seal (an original and certified one provided by the energy supplier) is fixed to each of the tabs formed at the engaging end portions of the frame parts 2, 3, and additionally, another original security seal is also fixed to the other tab 6 formed on the frame part 2. Such an application of the safety frame according to the present invention is schematically illustrated in Figure 5.

In a another possible application of the safety frame according to the present invention (not shown in the drawings), an original security seal is placed only in the security seal holding tab, and the cable or wire thereof is looped through the holes of the upper and the lower tabs.

After placing the security seal and fixing it in the tab 6 of safety frame 1, the security seal can be removed only by detaching the security seal holding tab 6 from frame part 2, which can solely be accomplished by damaging the safety frame 1 (more particularly, its security seal holding tab 6).

One of the advantages of the safety frame according to the present invention is that it can be placed onto a consumption meter without disassembling the indicator unit thereof, and due to its design it holds the original security seal in a well-visible location, thereby one can easily make sure whether or not it is intact, while disassembling the indicator unit can be done only by damaging the safety frame, which is easily noticeable at an occasional inspection.

## Claims

1. A safety frame (1), in particular for preventing the tampering of a household consumption meter, **characterized in that**
- said safety frame comprises two flat frame parts (2, 3) adapted to be rigidly fixed around the indicator unit of the consumption meter, said frame parts being engaged with each other at their corresponding end portions (2a, 2b, 3a, 3b),
- wherein the frame parts (2, 3), at the end portions (2a, 2b, 3 a, 3b) thereof, comprise tabs (4a, 4b, 5a, 5b), each provided with at least one hole, wherein the tabs (4a, 4b) arranged at the end portions (2a, 3a) of one of the frame parts (2) are formed so that they are engaged with the corresponding tabs (5a, 5b) arranged at the end portions (3a, 3b) of the other one of said frame parts (3), and
- wherein the corresponding holes of the tabs (4a, 5a; 4b, 5b) engaged with each other are arranged to be aligned during use, and
- one of the frame parts (2) further comprises a security seal holding tab (6) provided with at least one hole and is integrally connected to said frame part (2).

2. The safety frame according to claim 1, **characterized in that** the entire safety frame (1) is made of steel, preferably galvanized steel.

3. The safety frame according to claim 2, **characterized in that** the security seal holding tab (6) is fixed to said frame part (2) by spot welding.

4. The safety frame according to claim 1 or 2, **characterized in that** the security seal holding tab (6) and said frame part (2) are formed by one piece.
